# NEW EUROPEAN PATENT SPECIFICATION

(11) **EP 2 434 150 B2**
(45) Date of publication and mention of the opposition decision: **17.08.2016**
(45) Mention of the grant of the patent: 01.05.2013
(21) Application number: 10180129.8
(22) Date of filing: 27.09.2010
(51) Int. Cl.: F03D 80/70, F16C 19/38, F16C 19/54

(54) **A three row roller bearing, in particular for a wind turbine**
Dreireihiges Kugellager, insbesondere für eine Windturbine
Roulement à rouleaux à trois lignes, en particulier pour éolienne

(43) Date of publication of application: 28.03.2012
(73) Proprietor: Siemens Aktiengesellschaft, 80333 München (DE)
(72) Inventor: Stiesdal, Henrik, 5000 Odense C (DK)

(56) References cited:
- EP-A1- 1 677 005
- WO-A2-2008/131721
- DE-A1- 19 636 591
- US-A- 1 972 140
- US-A- 4 615 627
- US-A- 5 975 762

## Description

The present invention relates to a three row roller bearing, in particular for a wind turbine, comprising a row of radial rollers receiving radial load and a pair of rows of tapered axial rollers receiving axial load.

Such a bearing is known from US 5 975 762 A. This three row roller bearing comprises an inner race in the form of a cone, an outer race in the form of a segmented cup and tapered rollers arranged in two rows between the cone and cup and further cylindrical rollers arranged between the two rows of tapered rollers.

US 1 972 140 A discloses a bearing having an inner bearing member that is provided with conical raceways at its outer end tapering towards the ends of said bearing member and with a cylindrical raceway at its middle.

US 4 615 627 A discloses a bearing which is equipped with axially reversible and interchangeable end ceiling members ateach of axial ends of the roller bearing assembly.

Wind turbines are provided with a rotor shaft which is part of an electrical generator producing electricity during movement of the rotor relative to a stator of the generator. The stator comprises a number of coils, the rotor may comprise a number of permanent magnets or electrically charged magnets so that an electric voltage is induced when the rotor is turned.

In recent years a trend towards wind turbines with increased power can be observed which require large main shaft bearings. In large main shaft bearings temperature differences between an outer ring and an inner ring of the bearing may occur. Main shaft bearings may have large radial dimensions, e.g. a diameter of 2500 mm or more, whereas the width may only be in the size of e.g. 100 - 300 mm. These large bearing diameters require quite large radial tolerances leading to a large clearance in the radial direction to avoid damage of the bearing. Even small temperature differences of about one degree require a large clearance to avoid damage. However, the clearances can not be enlarged arbitrarily. Large radial tolerances of a main shaft bearing may lead to problems with large looseness so that adhesive wear of the rollers is promoted due to skid or smear bearing problems.

In order to avoid problems with tolerances of bearings for wind turbines it has been proposed to use two or more bearings to support the main shaft, in particular two radial rotor bearings and one axial roller bearing, placed along the main shaft. However, to use three single bearings is an expensive solution which takes up more space than just one large bearing. In EP 1 677 005 A1 a wind turbine is disclosed with a three row cylindrical roller bearing for a main shaft where the main shaft is connected to an input shaft of a gear box, the main shaft is supported to a nacelle by a single three row roller bearing comprising one row of rollers receiving a radial load and a pair of rows of rollers receiving a thrust load. The thrust load rollers are cylindrical rollers which may give adhesive wear due to skid problems as the radial speed increases along the rollers as the radial distance of the centreline of the bearing increases along the rollers.

It is therefore an object of the present invention to provide a three row roller bearing, in particular for a wind turbine, which is able to bear very high axial and radial loads.

According to the present invention this object is achieved by a three row roller bearing with the features of claim 1.

Due to the tapered axial rollers instead of cylindrical rollers the skid problems due to the increasing radial speed along the rollers are avoided. Therefore the inventive three row roller bearing guarantees a longer service life compared to a conventional three row roller bearing.

According to a further development of the inventive three row roller bearing it may comprise at least one outer ring receiving the axial rollers. In the inventive three row roller bearing the tapered axial rollers receive only axial loads, whereas radial loads are received by an outer ring.

According to a preferred embodiment of the invention the at least one outer ring may receive the tapered rollers in a recess. The inventive three row roller bearing is less sensitive to temperature differences between the outer ring and the inner ring as it is possible to have large radial tolerances giving a large clearance between the outer ring and the inner ring.

Preferably, in the inventive three row roller bearing the recess in the outer ring receives all the tapered shape of the tapered axial rollers. The dimensional tolerances of the inner ring and the outer ring provide a larger clearance in the radial direction than in the axial direction. The different clearances support the compensation of temperature differences between the inner and outer ring.

In one embodiment of the inventive three row roller bearing the rollers may roll and move freely between the inner and outer ring.

In an alternative embodiment of the inventive three row roller bearing the rollers are connected to one or more roller cages holding the rollers in specific positions while rotating and rolling.

According to a further development of the invention the three row roller bearing may be prestressed by an axial force. When the three row roller bearing is prestressed problems with looseness and related adhesive wear are avoided.

The inventive three row roller bearing may comprise a dynamic sealing between the at least one outer ring and the at least one inner ring.

Further the invention refers to a wind turbine, preferably comprising a main shaft, a hub, a generator stator part and/or a generator rotor part.

The main shaft, the hub and/or the generator rotor part of the inventive wind turbine may be supported by a three row roller bearing as explained above.

The inventive wind turbine may be a gearless direct drive wind turbine.

The invention and its underlying principle will be better understood when consideration is given to the following description of a preferred embodiment.

In the accompanying drawings:
- Fig. 1: is a first perspective sectional view of an embodiment of an inventive three row roller bearing;
- Fig. 2: is a second sectional view of the three row roller bearing of fig. 1; and
- Fig. 3: is a sectional view of the three row roller bearing of fig. 1.

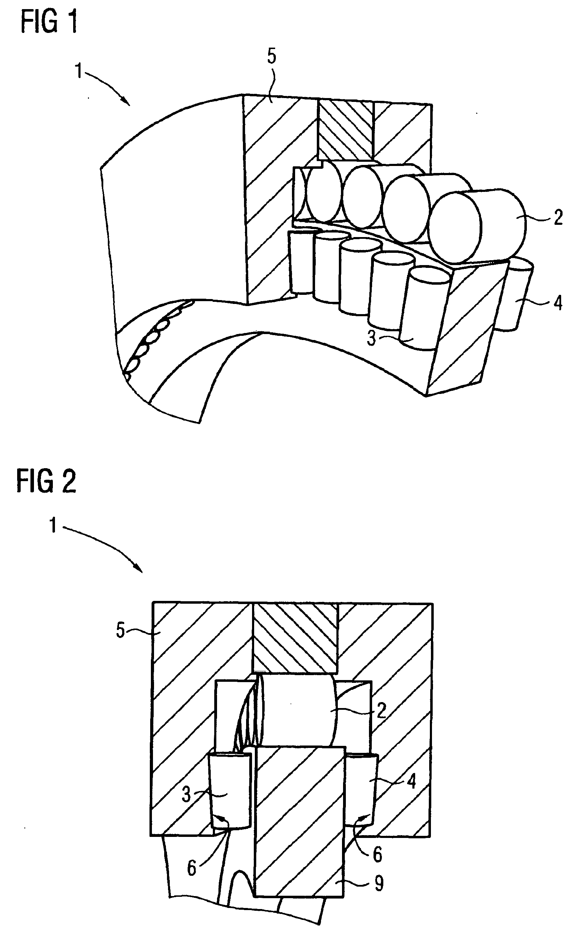

Fig. 1 and 2 show a portion of a three row roller bearing 1, comprising a row of radial rollers 2 and a pair of rows of axial rollers 3, 4 receiving axial load. The axial rollers 3, 4 are tapered which means that their outer diameter is larger than their inner diameter.

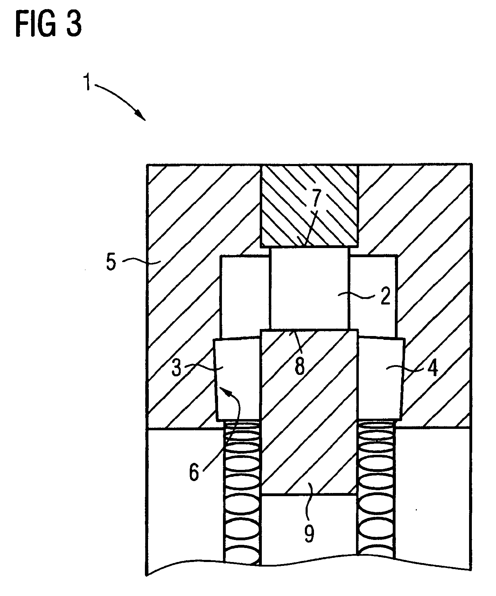

The three row roller bearing 1 comprises one outer ring 5 receiving the axial rollers 3, 4. As can be seen best in fig. 3 the radial rollers 2 are contacting a bearing surface 7 of the outer ring 5 on one side and a bearing surface 8 of an inner ring 9 on the other side.

In the outer ring 5 a recess 6 is provided which receives all the tapered shape of the tapered axial rollers 3, as is shown in fig. 3. The inner ring 9 has a non-tapered surface lying against the vertical surface of the tapered axial rollers 3. In this way the radial clearance may be large without damaging the tapered axial rollers.

The dimensional tolerances of the inner ring 9 and the outer ring 5 provide a larger clearance in radial direction than in axial direction, in order to compensate for temperature differences between the inner ring 9 and the outer ring 5.

The three row roller bearing 1 is in particular appropriate for use in a wind turbine. The three row roller bearing may be used to support a main shaft, a hub and/or a generator rotor part of a wind turbine which is preferably a gearless direct drive wind turbine. One part of the three row roller bearing 1 may be connected to a static structure part, e.g. a nacelle or a tower, or a generator stator part of the wind turbine and another part of the three row roller bearing may be connected to the rotatable main shaft, a hub and/or a generator rotor part of the wind turbine. In general one or more rotating and/or static parts of a wind turbine may be connected to the three row roller bearing.

The generator of a gearless direct drive wind turbine may comprise an outer rotor and an inner stator where the rotor and/or the stator is/are connected to the three row roller bearing.

## Claims

1. A three row roller bearing (1), in particular for a wind turbine, comprising a row of radial rollers (2) receiving radial load and a pair of rows of tapered axial rollers (3, 4) receiving axial load, **characterised in that** the bearing (1) comprises an inner ring (9) with a rectangular cross-section and two bearing surfaces for said axial rollers (3, 4) disposed on opposite surfaces of said inner ring (9) and another bearing surface for said radial roller (2) disposed between said opposite surfaces, whereby the dimensional tolerances of the inner ring (9) and the outer ring (5) provide a larger clearance in the radial direction than in the axial direction.

2. A three row roller bearing according to claim 1, **characterised in that** it comprises at least one outer ring (5) receiving the axial rollers (3, 4).

3. A three row roller bearing according to claim 2, **characterised in that** the at least one outer ring (5) receives the tapered axial rollers (3, 4) in a recess (6).

4. A three row roller bearing according to claim 3, **characterised in that** the recess (6) in the outer ring (5) receives all the tapered shape of the tapered axial rollers (3, 4).

5. A three row roller bearing according to any of the preceding claims, **characterised in that** the radial rollers (2) and/or the axial rollers (3, 4) roll and move freely.

6. A three row roller bearing according to any of claims 1 to 4, **characterised in that** the radial rollers (2) and/or the axial rollers (3, 4) are connected to one or more roller cages holding the rollers (2, 3, 4).

7. A three row roller bearing according to any of the preceding claims, **characterised in that** it is prestressed by an axial force.

8. A three row roller bearing according to any of the preceding claims, **characterised in that** it comprises a dynamic sealing between the at least one outer ring (5) and the at least one inner ring (9).

9. A wind turbine, comprising at least one rotating part and at least one static part, **characterised in that** the at least one rotating part and/or the at least one static part is/are connected to a three row roller bearing according to any of claims 1 to 8.

10. A wind turbine according to claim 9, **characterised in that** the at least one rotating part comprises a hub and/or a main shaft and/or a generator rotor.

11. A wind turbine according to claim 9, **characterised in that** the static parts comprise a generator stator.

12. A wind turbine according to any of claims 9 to 11, **characterised in that** the wind turbine is a gearless direct drive wind turbine.

13. A wind turbine according to claim 12, **characterised in that** a generator of the gearless direct drive wind turbine comprises an outer rotor and an inner stator.

## Patentansprüche

1. Dreireihiges Rollenlager (1), insbesondere für eine Windturbine, welches eine Reihe von Radialrollen (2), die radiale Last aufnehmen, und ein Paar von Reihen von Axialkegelrollen (3, 4), die axiale Last aufnehmen, umfasst, **dadurch gekennzeichnet, dass** das Lager (1) einen Innenring (9) mit einem rechteckigen Querschnitt und zwei Lagerflächen für die Axialrollen (3, 4), die an gegenüberliegenden Flächen dieses Innenrings (9) angeordnet sind, und eine weitere Lagerfläche für die Radialrollen (2), die zwischen diesen gegenüberliegenden Flächen angeordnet ist, umfasst, wobei die Maßtoleranzen des Innenrings (9) und des Außenrings (5) ein größeres Spiel in der radialen Richtung als in der axialen Richtung gewährleisten.

2. Dreireihiges Rollenlager nach Anspruch 1, **dadurch gekennzeichnet, dass** es mindestens einen Außenring (5) umfasst, der die Axialrollen (3, 4) aufnimmt.

3. Dreireihiges Rollenlager nach Anspruch 2, **dadurch gekennzeichnet, dass** der mindestens eine Außenring (5) die Axialkegelrollen (3, 4) in einer Ausnehmung (6) aufnimmt.

4. Dreireihiges Rollenlager nach Anspruch 3, **dadurch gekennzeichnet, dass** die Ausnehmung (6) in dem Außenring (5) die gesamte konische Form der Axialkegelrollen (3, 4) aufnimmt.

5. Dreireihiges Rollenlager nach einem der vorhergehenden Ansprüche, **dadurch gekennzeichnet, dass** die Radialrollen (2) und/oder die Axialrollen (3, 4) frei rollen und sich bewegen.

6. Dreireihiges Rollenlager nach einem der Ansprüche 1 bis 4, **dadurch gekennzeichnet, dass** die Radialrollen (2) und/oder die Axialrollen (3, 4) mit einem oder mehreren Rollenkäfigen verbunden sind, welche die Rollen (2, 3, 4) halten.

7. Dreireihiges Rollenlager nach einem der vorhergehenden Ansprüche, **dadurch gekennzeichnet, dass** es durch eine axiale Kraft vorgespannt ist.

8. Dreireihiges Rollenlager nach einem der vorhergehenden Ansprüche, **dadurch gekennzeichnet, dass** es eine dynamische Dichtung zwischen dem mindestens einen Außenring (5) und dem mindestens eine Innenring (9) umfasst.

9. Windturbine, welche mindestens ein rotierendes Teil und mindestens ein statisches Teil umfasst, **dadurch gekennzeichnet, dass** das mindestens eine rotierende Teil und/oder das mindestens eine statische Teil mit einem dreireihigen Rollenlager nach einem der Ansprüche 1 bis 8 verbunden sind/ist.

10. Windturbine nach Anspruch 9, **dadurch gekennzeichnet, dass** das mindestens eine rotierende Teil eine Nabe und/oder eine Hauptwelle und/oder einen Generatorrotor umfasst.

11. Windturbine nach Anspruch 9, **dadurch gekennzeichnet, dass** die statischen Teile einen Generatorstator umfassen.

12. Windturbine nach einem der Ansprüche 9 bis 11, **dadurch gekennzeichnet, dass** die Windturbine eine Windturbine mit getriebelosem Direktantrieb ist.

13. Windturbine nach Anspruch 12, **dadurch gekennzeichnet, dass** ein Generator der Windturbine mit getriebelosem Direktantrieb einen Außenrotor und einen Innenstator umfasst.

## Revendications

1. Roulement à rouleaux à trois rangées (1), en particulier pour une éolienne, comprenant une rangée de rouleaux radiaux (2) recevant une charge radiale et une paire de rangées de rouleaux axiaux progressivement rétrécis (3, 4) recevant une charge axiale, **caractérisé en ce que** le roulement (1) comprend une bague interne (9) avec une section transversale rectangulaire et deux surfaces de roulement pour lesdits rouleaux axiaux (3, 4) disposés sur des surfaces opposées de ladite bague interne (9) et une autre surface de roulement pour ledit rouleau radial (2) disposé entre lesdites surfaces opposées, moyennant quoi les tolérances dimensionnelles de la bague interne (9) et de la bague externe (5) fournissent un espace plus grand dans la direction radiale que dans la direction axiale.

2. Roulement à rouleaux à trois rangées, **caractérisé en ce qu'**il comprend au moins une bague externe (5) recevant les rouleaux axiaux (3, 4).

3. Roulement à rouleaux à trois rangées selon la revendication 2, **caractérisé en ce que** l'au moins une bague externe (5) reçoit les rouleaux axiaux progressivement rétrécis (3, 4) dans un évidement (6).

4. Roulement à rouleaux à trois rangées selon la revendication 3, **caractérisé en ce que** l'évidement (6) dans la bague externe (5) reçoit toute la forme progressivement rétrécie des rouleaux axiaux progressivement rétrécis (3, 4).

5. Roulement à rouleaux à trois rangées selon l'une quelconque des revendications précédentes, **caractérisé en ce que** les rouleaux radiaux (2) et/ou les rouleaux axiaux (3, 4) roulent et se déplacent librement.

6. Roulement à rouleaux à trois rangées selon l'une quelconque des revendications 1 à 4, **caractérisé en ce que** les rouleaux radiaux (2) et/ou les rouleaux axiaux (3, 4) sont reliés à une ou plusieurs cages de rouleaux maintenant les rouleaux (2, 3, 4).

7. Roulement à rouleaux à trois rangées selon l'une quelconque des revendications précédentes, **caractérisé en ce qu'**il est précontraint par une force axiale.

8. Roulement à rouleaux à trois rangées selon l'une quelconque des revendications précédentes, **caractérisé en ce qu'**il comprend un joint d'étanchéité dynamique entre l'au moins une bague externe (5) et l'au moins une bague interne (9).

9. Eolienne, comprenant au moins une partie rotative et au moins une partie statique, **caractérisée en ce que** l'au moins une partie rotative et/ou l'au moins une partie statique est/sont reliées à un roulement à rouleaux à trois rangées selon l'une quelconque des revendications 1 à 8.

10. Eolienne selon la revendication 9, **caractérisée en ce que** l'au moins une partie rotative comprend un moyeu et/ou un arbre principal et/ou un rotor de générateur.

11. Eolienne selon la revendication 9, **caractérisée en ce que** les parties statiques comprennent un stator de générateur.

12. Eolienne selon l'une quelconque des revendications 9 à 11, **caractérisée en ce que** l'éolienne est une éolienne à entraînement direct sans engrenage.

13. Eolienne selon la revendication 12, **caractérisée en ce qu'**un générateur de l'éolienne à entraînement direct sans engrenage comprend un rotor externe et un stator interne.
